# EUROPEAN PATENT APPLICATION

(11) **EP 4 534 387 A1**
(43) Date of publication of application: **09.04.2025**
(21) Application number: 22943806.4
(22) Date of filing: 27.05.2022
(51) Int. Cl.: B62D 1/183

(54) **STEERING DEVICE**

(71) Applicant: JTEKT Corporation, Kariya-shi, Aichi 448-8652 (JP)
(72) Inventor: TOKIOKA, Ryoichi, Kariya-shi, Aichi 448-8652 (JP)
(74) Representative: Winter, Brandl - Partnerschaft mbB
(86) International application number: PCT/JP2022/021739
(87) International publication number: WO 2023/228406

(57) **Abstract**

A steering system (100) that holds an operating member (200) movably between a first position in which a driver is able to perform steering and a second position at a front side of a vehicle, the steering system (100) including a steering shaft (110), a first movable member (120) that rotatably holds the steering shaft (110), an intermediate guide member (103) that holds the first movable member (120) such that the first movable member (120) is able to reciprocate along a first axis (221), and a base member (150) that is fixed to the vehicle and holds the intermediate guide member (103) such that the intermediate guide member (103) is able to reciprocate along a second axis (222), the first axis (221) extending in a direction that is downward relative to the second axis (222) as the first axis (221) extends toward front side of the vehicle.

## Description

### TECHNICAL FIELD

The present invention relates to a steering system that is capable of expanding space in front of a driver by changing a position of an operating member such as a steering wheel or the like.

### BACKGROUND ART

In a state of automated driving level 3 or higher, in which the system is fully responsible for automated driving of a vehicle, the driver does not need to be responsible for operating the vehicle, and accordingly does not need to hold the steering wheel. Accordingly, moving the steering wheel during automated driving, such that ample space can be secured in front of the driver, can improve comfort for the driver. For this reason, technology has been proposed in which the steering wheel is moved to a front side in the vehicle during autonomous driving (e.g., see Patent Document 1).

### Related Art Documents

### Patent Documents

Patent Document 1: WO2019/193956

### SUMMARY OF THE INVENTION

### Problem to be Solved by the Invention

However, moving the operating member maximally forward in the vehicle involves increasing the length of the entire steering system, and disposing a forward end portion of the steering system close to an engine compartment. Also, the steering system is disposed inclining downward toward the front of the vehicle, and accordingly there is a possibility of interfering with vehicle members such as brake-related members, air-conditioning-related members, and so forth, that are disposed downward from the steering system.

The present invention has been made in light of the above problems, and an object thereof is to provide a steering system in which an operating member such as a steering wheel or the like can be moved over greater distances while avoiding interference between the steering system and vehicle members.

### Means for Solving the Problem

In order to achieve the above-mentioned object, a steering system that is one of the present invention holds an operating member movably between a first position in which a driver is able to perform steering and a second position at a front side of a vehicle, the steering system including a steering shaft that holds the operating member, a first movable member that rotatably holds the steering shaft, an intermediate guide member that holds the first movable member such that the first movable member is able to reciprocate along a first axis, and a base member that is fixed to the vehicle and that holds the intermediate guide member such that the intermediate guide member is able to reciprocate along a second axis, in which the first axis extends in a downward direction as the first axis extends toward the front side of the vehicle, and the second axis extends in an upward direction relative to the first axis as the second axis extends toward the front side of the vehicle.

### Effects of the Invention

According to the present invention, a steering system in which an operating member can be moved over greater distances while avoiding vehicle members can be provided.

### BRIEF DESCRIPTION OF THE DRAWINGS

[FIG. 1] FIG. 1 is a perspective view illustrating a steering system together with an operating member and an attaching portion.
[FIG. 2] FIG. 2 is a disassembled perspective view of the steering system.
[FIG. 3] FIG. 3 is a side view illustrating a state of attachment of the steering system to a vehicle with the operating member advanced.
[FIG. 4] FIG. 4 is a side view illustrating a state of attachment of the steering system to the vehicle with the operating member retracted.

### MODES FOR CARRYING OUT THE INVENTION

A steering system according to a first aspect of the present invention holds an operating member movably between a first position in which a driver is able to perform steering and a second position at a front side of a vehicle, the steering system including a steering shaft that holds the operating member, a first movable member that rotatably holds the steering shaft, an intermediate guide member that holds the first movable member such that the first movable member is able to reciprocate along a first axis, and a base member that is fixed to the vehicle and that holds the intermediate guide member such that the intermediate guide member is able to reciprocate along a second axis, in which the first axis extends in a downward direction as the first axis extends toward the front side of the vehicle, and the second axis extends in an upward direction relative to the first axis as the second axis extends toward the front side of the vehicle.

According to this, an entirety of the steering system and the operating member move toward the front side of the vehicle in a region above the first axis and reaches the second position, thereby enabling interference with other components besides the steering system, such as vehicle members or the like, to be avoided.

In addition to the first aspect, in the steering system according to a second aspect of the present invention, the intermediate guide member includes a holding member that holds the first movable member such that the first movable member is able to reciprocate along the first axis, and a second movable member that is held by the base member so as to be able to reciprocate along the second axis, and that holds the holding member such that the holding member is tiltable, and the base member holds the second movable member such that the second movable member is able to reciprocate along the second axis.

Due to the intermediate guide member being made up of the holding member and the second movable member, relative movement between the second movable member and the holding member can be realized, thereby enabling freedom of layout of the operating member at the first position to be improved.

**In** addition to the first aspect or the second aspect, in the steering system according to a third aspect of the present invention, the second axis extends in an upward direction relative to horizontal as the second axis extends toward the front side of the vehicle.

According to this, the entirety of the steering system and the operating member that has been moved to the second position is stored at the forward side of the vehicle in a region that is higher than in a case of being present in the first position, thereby enabling even more ample space around the feet to be ensured.

**In** addition to any one of the first aspect, the second aspect, and the third aspect, in the steering system according to a fourth aspect of the present invention, the base member includes a first base rail that is disposed on one side of the first movable member in a width direction of the vehicle and extends along the second axis, and a second base rail that is disposed on another side of the first movable member and extends along the second axis, and the intermediate guide member includes a first movable rail that is disposed on the one side of the first movable member in the width direction of the vehicle and is guided by the first base rail, and a second movable rail that is disposed on the other side of the first movable member and is guided by the second base rail.

According to this, the intermediate guide member is guided with high supporting rigidity relative to the base member by the two rail mechanisms disposed on both sides in the width direction, thereby enabling stable operation to be ensured.

Next, an embodiment of a steering system according to the present invention will be described with reference to the drawings. Note that the embodiment described below illustrates a comprehensive or specific example. Numerical values, shapes, materials, components, layout positions and connection forms of the components, steps and order of the steps, and so forth, which are illustrated in the following embodiment, are examples and are not intended to limit the present invention. Among the components in the following embodiment, components that are not described in the independent claims showing the broadest concepts will be described as optional components.

Also, the drawings are schematic drawings in which objects are emphasized, omitted, or adjusted in terms of their proportions as appropriate to demonstrate the present invention, and accordingly may differ from actual shapes, positional relations, and proportions in some cases.

Also, a plurality of inventions may be comprehensively described as one embodiment below in some cases. Also, a portion of the content described below is described as being optional components related to the present invention.

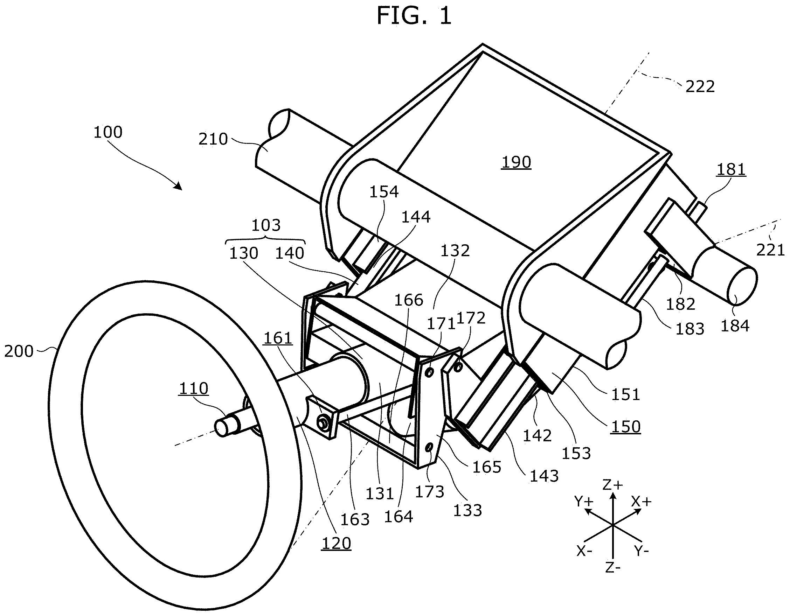

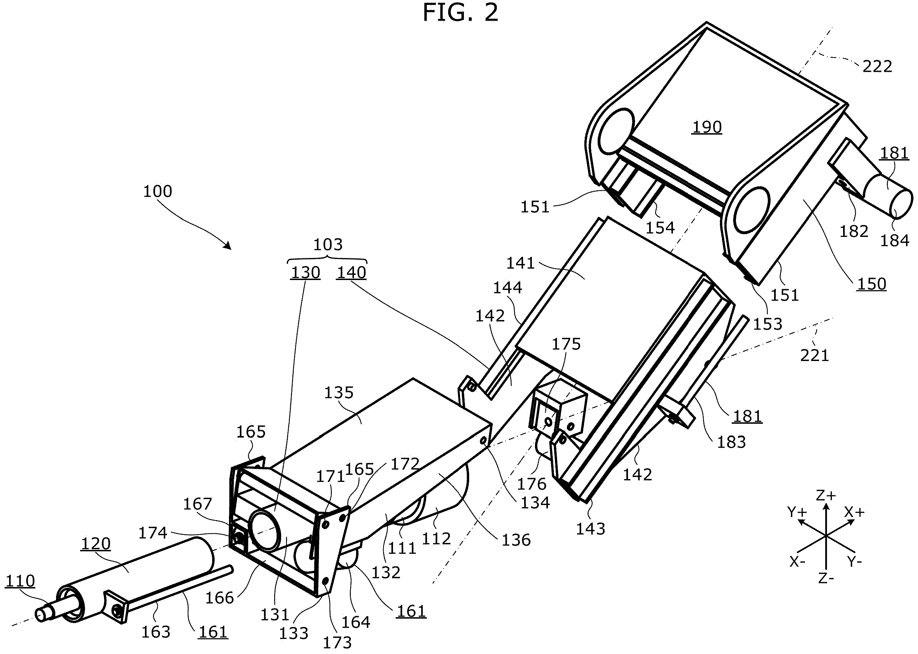

FIG. 1 is a perspective view illustrating a steering system 100 together with an operating member 200 and an attaching portion 210. FIG. 2 is a disassembled perspective view of the steering system 100. The steering system 100 is a steering system 100 that holds the operating member 200 movably between an advanced position (first position), which is a position at which a driver normally performs steering, and a retracted position (second position), which is on the front side (X+ side in the drawings) in a vehicle 300, and is provided with a steering shaft 110, a first movable member 120, an intermediate guide member 103, and a base member 150. In the case of the present embodiment, the intermediate guide member 103 includes a holding member 130 and a second movable member 140. The steering system 100 is not mechanically linked to a steering mechanism of the vehicle 300, and is a device that realizes a so-called linkless steer-by-wire system in which a signal is generated based on amount of operation of the operating member 200 by the driver, and the signal is output to a control device that controls the steering mechanism. Also, the operating member 200 can also be steered while moving between the advanced position and the retracted position.

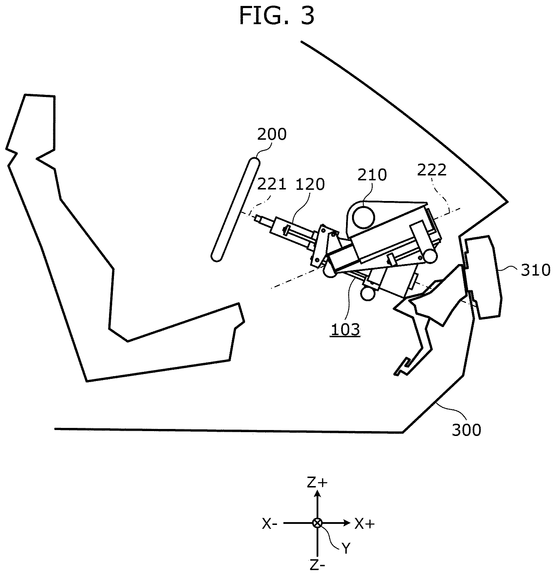

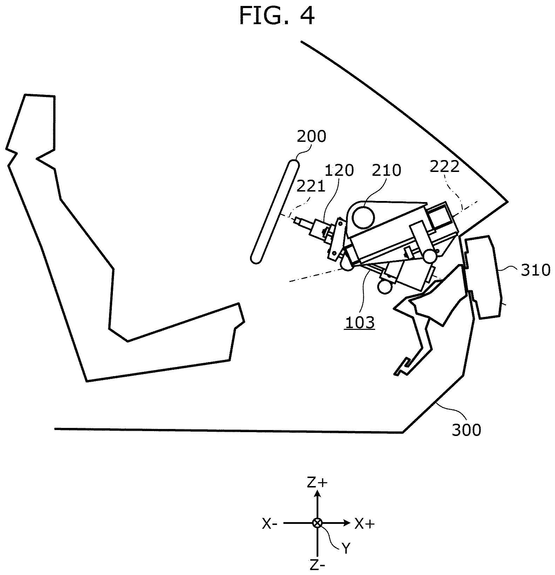

The operating member 200 is a member that is operated by the driver to steer the vehicle 300 (see FIGS. 3 and 4) in which the steering system 100 is installed. The shape of the operating member 200 is not limited in particular, and examples include a rod shape, a joystick shape, and so forth. In the case of the present embodiment, the operating member 200 is an annular member called a steering wheel. Note that while only a ring is illustrated as the operating member 200 in FIG. 1, the operating member 200 is provided with spokes or the like for attachment to the steering shaft 110.

The attaching portion 210 is a vehicle member or part to which the steering system 100 is attached. In the case of the present embodiment, the attaching portion 210 is a part of a structural member that makes up a vehicle body, such as a reinforcement. The reinforcement is, for example, a tubular beam extending in a width direction of the vehicle 300.

The steering shaft 110 is attached to the first movable member 120, and is a member that rotatably holds the operating member 200. The shape of the steering shaft 110 is not limited in particular, and may be, for example, a cylindrical shape, a hexagonal column, or the like. Also, the cross-sectional shape and cross-sectional area of the steering shaft 110 may differ depending on the position along the axial direction (X axial direction in the drawings). In the case of the present embodiment, the steering shaft 110 is disposed by being inserted coaxially inside the first movable member 120 that is tubular, and attached to the first movable member 120 via a bearing.

Note that a reactive device 111 is connected to an end portion of the steering shaft 110 on a forward side of the vehicle 300, and generates a force that counters force that is input to the operating member 200 by the driver. Also, a steering angle sensor (omitted from illustration) that detects a rotation amount of the steering shaft 110, a torque sensor (omitted from illustration) that detects torque generated in the steering shaft 110, and so forth, are connected to the steering shaft 110. A rotation amount regulation device 112 is connected to the end portion of the steering shaft 110, on the front side (X+ side in the drawings) thereof in the vehicle 300. The rotation amount regulation device 112 is a mechanism that regulates a rotation angle of the steering shaft 110 so as to be within a predetermined range. In the case of the linkless steer-by-wire steering system 100, there is no connecting mechanism between the steering shaft 110 and steered wheels, that regulates the rotation angle of the steering shaft 110, and accordingly, rotation ends of the operating member 200 are normally determined by software, by controlling the reactive device 111. However, the rotation amount regulation device 112 that mechanically regulates rotation of the operating member 200 within a predetermined angle range is provided in case that electric power is not supplied to the reactive device 111, or the like.

The first movable member 120 is a member that rotatably holds the steering shaft 110 and reciprocates along a first axis 221 relative to the intermediate guide member 103, together with the steering shaft 110 and the operating member 200 attached to the steering shaft 110. The shape of the first movable member 120 is not limited in particular, but in the case of the present embodiment, the first movable member 120 has a cylindrical shape through which the steering shaft 110 can pass, and a tube axis thereof is disposed along the first axis 221.

The intermediate guide member 103 is a member that holds the first movable member 120 such that the first movable member 120 is able to reciprocate along the first axis 221, and also that reciprocates along a second axis 222 relative to the base member 150. The shape and structure of the intermediate guide member 103 are not limited in particular. In the case of the present embodiment, the intermediate guide member 103 includes the holding member 130 and the second movable member 140.

The holding member 130 is a member that holds the first movable member 120 such that the first movable member 120 is able to reciprocate along the first axis 221, and is pivotably supported so as to be tiltable relative to the second movable member 140. The shape of the holding member 130 is not limited in particular. In the case of the present embodiment, the holding member 130 includes a first holding member 131, a second holding member 132, and a link member 133.

The first holding member 131 is a member that directly holds the first movable member 120 such that the first movable member 120 is able to reciprocate along the first axis 221. The shape of first holding member 131 is not limited in particular, as long as it is a shape that can guide the first movable member 120. In the case of the present embodiment, the first holding member 131 has a tubular shape extending along the first axis 221, and the first movable member 120 that has a tubular shape can be passed therethrough.

The reactive device 111 and the rotation amount regulation device 112 are attached to the end portion of the first holding member 131 on the forward side (the X+ side in the drawings) in the vehicle 300. The steering shaft 110, which is connected to the reactive device 111 and the rotation amount regulation device 112, is structured to expand and contract in accordance with the reciprocal movement of the first movable member 120 relative to the first holding member 131, and also to be able to transmit torque received from the operating member 200. Examples of the structure of the steering shaft 110 can include a serration-fit or spline-fit telescopic structure.

The second holding member 132 is a member that is pivotably supported so as to be tiltable relative to the second movable member 140, and fixedly holds the first holding member 131. According to the above structure, the second holding member 132 and the first holding member 131 can be tilted relative to the second movable member 140. When the second holding member 132 and the first holding member 131 are tilted, the angle of the first axis 221, upon which the first movable member 120 reciprocates, relative to the second axis 222, changes.

The shape of the second holding member 132 is not limited in particular. In the case of the present embodiment, the second holding member 132 has first pivot holes 134 at the end portion on the forward side (X+ side in the drawings) thereof in the vehicle 300, so as to be pivotably supported by the second movable member 140, the first pivot holes 134 being perpendicular to the first axis 221 and extending along a horizontal plane. The second holding member 132 is pivotably supported by the link member 133 at an end portion on a rearward side (X- side in the drawings) thereof in the vehicle 300. A rotation axis of the second holding member 132 relative to the link member 133 is parallel to an extension direction of the first pivot holes 134. The second holding member 132 has a top plate 135, and first wall portions 136 disposed at both end portions of the top plate 135 in the width direction (Y axial direction in the drawings) in the vehicle 300 and descending downward, and the first holding member 131 is attached between the two first wall portions 136.

In the case of the present embodiment, first moving means 161, for causing reciprocal movement of the first movable member 120 relative to the first holding member 131, are provided between the second holding member 132 and the first movable member 120. The structure of the first moving means 161 is not limited in particular. **In** the case of the present embodiment, the first moving means 161 extend along the first axis 221 and include a first feed screw 163 that moves together with the first movable member 120 in a direction along the first axis 221. Also, the first moving means 161 are fixed to the second holding member 132 in the direction along the first axis 221 and are equipped with a first feed nut (omitted from illustration) that rotates around a rotation axis of the first feed screw 163, and a first motor 164 that rotates the first feed nut.

The link member 133 is a member that transmits torque to the second holding member 132, to tilt the second holding member 132 relative to the second movable member 140. The shape of the link member 133 is not limited in particular. **In** the case of the present embodiment, the members that tilt integrally with the second movable member 140 are the first holding member 131, the second holding member 132, the first movable member 120, the steering shaft 110, and the operating member 200, and since these tilt about the first pivot holes 134, the shape of the link member 133 is a shape that can withstand generation of great torque. Also, the link member 133 is shaped to prevent backlash of the operating member 200 in a tilting direction, due to force being applied to the operating member 200 by the driver. Specifically, the link member 133 includes two plate portions 165 disposed in an upright state along the first wall portions 136 on respective outer sides of the two first wall portions 136 of the second holding member 132, and a beam portion 166 connecting the two plate portions 165 downward from the first holding member 131. A first pivoting portion 171 which pivotably supports the rearward side in the vehicle 300 of the second holding member 132 is provided on upper sides of the plate portions 165 on the rearward side (X-side in the drawings) thereof in the vehicle 300, a second pivoting portion 172 which pivotably supports the forward side in the vehicle 300 of the second movable member 140 is provided on the upper sides of the plate portions 165 on the forward side (X+ side in the drawings) thereof in the vehicle 300, and a third pivoting portion 173 which pivotably supports tilting means 167 described below is provided on lower sides of the plate portions 165.

The tilting means 167 are provided between the link member 133 and the second movable member 140, and are a device for tilting (rotationally swinging) of the second holding member 132 relative to the second movable member 140 via the link member 133. The structure of the tilting means 167 is not limited in particular. In the case of the present embodiment, the tilting means 167 include a tilting feed screw 174 that is pivotably supported so as to be turnable relative to the third pivoting portion 173 of the link member 133. Also, the tilting means 167 are fixed to the second movable member 140 in the direction along the first axis 221, and are equipped with a tilting feed nut 175 that rotates about a rotation axis of the tilting feed screw 174, and a tilting motor 176 that rotates the tilting feed nut 175.

The second movable member 140 is a member that is held by the base member 150 so as to be able to reciprocate along the second axis 222, holds the holding member 130 such that the holding member 130 is able to reciprocate relative to the base member 150, and holds the holding member 130 such that the holding member 130 is tiltable relative to the second movable member 140. The shape of the second movable member 140 is not limited in particular. In the case of the present embodiment, the second movable member 140 includes two second wall portions 142 disposed descending downward along the first wall portions 136 on respective outer sides of the two first wall portions 136 of the second holding member 132, and a first linking portion 141 that links the two second wall portions 142 at upper edges of the second wall portions 142. The second movable member 140 also includes a first movable rail 143 and a second movable rail 144 that are each attached along the second axis 222 to outer side faces of the two second wall portions 142 in the width direction of the vehicle 300. The first movable rail 143 and the second movable rail 144 are disposed so as to sandwich the first movable member 120 therebetween in the width direction of the vehicle 300.

The base member 150 is a member that is fixed to the attaching portion 210 such as a reinforcement, which is one of the structural members of the vehicle 300, and holds the second movable member 140 of the intermediate guide member 103 such that the second movable member 140 is able to reciprocate along the second axis 222. The base member 150 is fixed to the attaching portion 210 in a state of holding the intermediate guide member 103 so as to extend in a downward direction as the first axis 221 extends toward the front side of the vehicle 300 (X+ side in the drawings). **In** the case of the present embodiment, the base member 150 is fixed to the attaching portion 210 in a suspended state, such that the second axis 222, which is a direction in which the intermediate guide member 103 moves, extends in an upward direction relative to the first axis 221 as the second axis 222 extends toward the front side of the vehicle 300. By attaching the base member 150 in this manner, the first axis 221 extends in a downward direction relative to horizontal as the first axis 221 extends toward the front side of the vehicle 300. Note that the first axis 221 also tilts as the holding member 130 tilts relative to the second movable member 140, but in any tilting position, the state is maintained in which the first axis 221 extends in a downward direction relative to the second axis 222 as the first axis 221 extends toward the front side of the vehicle 300. **In** the case of the present embodiment, the first axis 221 maintains the state of extending in a downward direction relative to horizontal as the first axis 221 extends toward the front side of the vehicle 300, in any tilting position.

The shape of the base member 150 is not limited in particular. In the case of the present embodiment, the base member 150 includes two third wall portions 151 disposed along the second wall portions 142 in a state of descending downward, on respective outer sides of the two second wall portions 142 of the second movable member 140, a second linking portion (omitted from illustration) linking the two third wall portions 151 at upper edges of the third wall portions 151, and a first base rail 153 and a second base rail 154 attached along the second axis 222 to respective inner side faces of the two third wall portions 151 in the width direction of the vehicle 300, and which guide the first movable rail 143 and the second movable rail 144, respectively. The first base rail 153 and the first movable rail 143 make up a first linear motion mechanism, and the second base rail 154 and the second movable rail 144 make up a second linear motion mechanism. The first linear motion mechanism and the second linear motion mechanism are disposed so as to sandwich the first movable member 120 in the width direction of the vehicle 300.

The third wall portions 151 and the second linking portion are integrally formed, and a bracket 190 is fixed to the second linking portion. The base member 150 is fixed to the attaching portion 210 via the bracket 190 that is attached to an upper face of the second linking portion. The shape of the bracket 190 is not limited in particular, and a shape corresponding to the shape of the attaching portion 210 is selected.

**In** the case of the present embodiment, second moving means 181 for reciprocal movement of the second movable member 140 relative to the base member 150 are provided between the base member 150 and the second movable member 140 of the intermediate guide member 103. The structure of the second moving means 181 is not limited in particular. In the case of the present embodiment, the second moving means 181 include a second feed screw 183 that extends in a direction along the second axis 222, and moves together with the second movable member 140 in the direction along the second axis 222. Also, the second moving means 181 are fixed to the base member 150 in the direction along the second axis 222, and include a second feed nut 182 that rotates about a rotation axis of the second feed screw 183, and a second motor 184 that rotates the second feed nut 182.

FIG. 3 is a side view illustrating the steering system 100 together with a portion of the vehicle members in a state in which the operating member 200 is disposed in the advanced position. FIG. 4 is a side view illustrating the steering system 100 together with a portion of the vehicle members in a state in which the operating member 200 is disposed in the retracted position. To advance the operating member 200 from the state illustrated in FIG. 4 to the state illustrated in FIG. 3, the intermediate guide member 103 is lowered relative to the attaching portion 210 while being moved toward the rearward side (X- side in the drawings) in the vehicle 300, and also the first movable member 120 is raised relative to the intermediate guide member 103 while being moved toward the rearward side (X- side in the drawings) in the vehicle 300. In other words, the intermediate guide member 103 is moved to the rearward side of the vehicle 300 while descending along the second axis 222, and also the first movable member 120 advances along the first axis 221 in an upward direction relative to the second axis 222. By coordinating the operation of the first movable member 120 and the operation of the intermediate guide member 103 in this manner, the operating member 200 can be advanced in one predetermined axial direction, for example along a front-rear direction of the vehicle 300 within a horizontal plane including the attaching portion 210, and the operating member 200 can be advanced while avoiding interference among vehicle members such as a brake-related member 310 or the like, and the intermediate guide member 103 and the first movable member 120. It should be noted that there are cases in which the brake-related member 310 that is illustrated is not aligned with the intermediate guide member 103 in the width direction of the vehicle 300 (Y axial direction in the drawings). In this case, there is no interference between the brake-related member 310 and the intermediate guide member 103.

Also, to retract the operating member 200 from the state illustrated in FIG. 3 to the state illustrated in FIG. 4, the first movable member 120 is moved to the forward side (X+ side in the drawings) in the vehicle 300 while descending toward the intermediate guide member 103, and also the intermediate guide member 103 is raised and brought close to the attaching portion 210 while moving to the forward side (X+ side in the figure) in the vehicle 300. That is to say, the first movable member 120 is moved downward to the forward side of the vehicle 300 along the first axis 221, and also the intermediate guide member 103 is retracted along the second axis 222 in an upward direction relative to the first axis 221. By coordinating the operation of the movable member 120 and the operation of the intermediate guide member 103 in this manner, the operating member 200 can be retracted in one predetermined axial direction, for example along the front-rear direction of the vehicle 300 within a horizontal plane including the attaching portion 210, and the operating member 200 can be moved to the forward side of the vehicle 300 while avoiding interference among vehicle members such as the brake-related member 310 or the like, and the intermediate guide member 103 and the first movable member 120. When retracting the operating member 200 from the state illustrated in FIG. 3 to the state illustrated in FIG. 4, even if the operating member 200 is moved downward to the forward side of the vehicle 300, raising the intermediate guide member 103 toward the attaching portion 210 while moving to the forward side of the vehicle 300 enables the operating member 200 as a whole to move toward the attaching portion 210, and accordingly the operating member 200, the first movable member 120, and the intermediate guide member 103 can avoid interference with the vehicle members. Also, disposing the attaching portion 210 at a relatively high position on the forward side of the vehicle 300 enables ample space to be ensured not only forward of the driver but also around the feet of the driver.

According to the steering system 100 according to the embodiment, the first movable member 120 and the intermediate guide member 103 retract toward the forward side of the vehicle in a region above an extended line of the first axis 221 in the advanced position, thereby enabling interference with vehicle members to be avoided when retracting.

Also, providing the intermediate guide member 103 with the holding member 130 and the second movable member 140, and making the second movable member 140 to be tiltable relative to the holding member 130 enables the degree of freedom in positioning the operating member 200 in the advanced position to be improved while maintaining the effects of avoiding interference between the vehicle members and the steering system 100 when retracting.

Also, orienting the first axis 221 downward and the second axis 222 upward relative to the horizontal plane as the first axis 221 and the second axis 222 extend toward the forward side of the vehicle 300 enables the first movable member 120 and the intermediate guide member 103 to be raised and retracted to the forward side of the vehicle, thereby enabling ample space to be ensured not only forward of the driver but also around the feet of the driver.

Also, the intermediate guide member 103 is held so as to be able to reciprocate relative to the base member 150 by the first movable rail 143 and the first base rail 153 (first linear motion mechanism) and the second movable rail 144 and the second base rail 154 (second linear motion mechanism), which extend in the second axis direction and are each disposed sandwiching the first movable member 120 and the holding member 130 therebetween in the width direction of the vehicle, i.e, no linear motion mechanism is disposed above the intermediate guide member 103, and accordingly the intermediate guide member 103 can be raised so as to be maximally close to the attaching portion 210. This enables ample space to be ensured around the feet of the driver in a state in which the operating member 200 is disposed in the retracted position. Also, the intermediate guide member 103 and the first movable member 120 can be supported in a well-balanced manner by the first linear motion mechanism and the second linear motion mechanism, and accordingly supporting rigidity can be increased.

Note that the present invention is not limited to the above embodiment. For example, the present invention may include other embodiments that are realized by optionally combining the components described in the present specification, or by omitting some of the components. The present invention also includes modifications obtained by making various changes that are conceivable by one skilled in the art to the above embodiment without departing from the spirit and scope of the present invention, that is, from the meaning of the language set forth in the claims.

For example, description has been made regarding a case in which the base member 150 is fixed to the attaching portion 210 in a state of being suspended from a vehicle member such as a reinforcement, but the base member 150 may also be attached in a state of being placed on the vehicle member.

Further, although a case in which the steering system 100 includes a tilt mechanism that tilts the direction of movement (first axis 221) of the first movable member 120 has been described, the tilt mechanism does not have to be provided.

Also, the guide mechanism for the second movable member 140 relative to the base member 150 has been described as being two rail mechanisms, and the guide mechanism for the first movable member 120 relative to the first holding member 131 has been described as two tubular members that slide in a fit state, but the types and combinations of the guide mechanisms are not limited to these, and any type and any combination may be employed.

Also, while a case in which the linear motion mechanisms are disposed on both sides of the intermediate guide member 103 in the width direction of the vehicle has been described, this does not exclude a linear motion mechanism being disposed above the intermediate guide member 103.

### INDUSTRIAL APPLICABILITY

The present invention can be used for steer-by-wire steering systems for steering vehicles 300 such as automobiles, buses, trucks, or the like.

### Description of the Reference Numerals

100 Steering system
103 Intermediate guide member
110 Steering shaft
111 Reactive device
112 Rotation amount regulation device
120 First movable member
130 Holding member
131 First holding member
132 Second holding member
133 Link member
134 First pivot hole
135 Top plate
136 First wall portion
140 Second movable member
141 First linking portion
142 Second wall portion
143 First movable rail
144 Second movable rail
150 Base member
151 Third wall portion
153 First base rail
154 Second base rail
161 First moving means
163 First feed screw
164 First motor
165 Plate portion
166 Beam portion
167 Tilting means
171 First pivoting portion
172 Second pivoting portion
173 Third pivoting portion
174 Tilt feed nut
175 Tilt feed nut
176 Tilt motor
181 Second moving means
182 Second feed nut
183 Second feed screw
184 Second motor
190 Bracket
200 Operating member
210 Attaching portion
221 First axis
222 Second axis
300 Vehicle
310 Brake-related member

## Claims

1. A steering system that holds an operating member movably between a first position in which a driver is able to perform steering and a second position at a front side of a vehicle, the steering system comprising:
a steering shaft that holds the operating member;
a first movable member that rotatably holds the steering shaft;
an intermediate guide member that holds the first movable member such that the first movable member is able to reciprocate along a first axis; and
a base member that is fixed to the vehicle and that holds the intermediate guide member such that the intermediate guide member is able to reciprocate along a second axis, wherein
the first axis extends in a downward direction as the first axis extends toward the front side of the vehicle, and
the second axis extends in an upward direction relative to the first axis as the second axis extends toward the front side of the vehicle.

2. The steering system according to claim 1, wherein
the intermediate guide member includes
a holding member that holds the first movable member such that the first movable member is able to reciprocate along the first axis, and
a second movable member that is held by the base member so as to be able to reciprocate along the second axis, and that holds the holding member such that the holding member is tiltable, and
the base member holds the second movable member such that the second movable member is able to reciprocate along the second axis.

3. The steering system according to claim 1 or 2, wherein the second axis extends in an upward direction relative to horizontal as the second axis extends toward the front side of the vehicle.

4. The steering system according to claim 1 or 2, wherein
the base member includes a first base rail that is disposed on one side of the first movable member in a width direction of the vehicle and extends along the second axis, and a second base rail that is disposed on another side of the first movable member and extends along the second axis, and
the intermediate guide member includes a first movable rail that is disposed on the one side of the first movable member in the width direction of the vehicle and is guided by the first base rail, and a second movable rail that is disposed on the other side of the first movable member and is guided by the second base rail.

## Amended claims

### Amended claims under Art. 19.1 PCT

1. A steering system that holds an operating member movably between a first position in which a driver is able to perform steering and a second position at a front side of a vehicle, the steering system comprising:
a steering shaft that holds the operating member;
a first movable member that rotatably holds the steering shaft;
an intermediate guide member that holds the first movable member such that the first movable member is able to reciprocate along a first axis; and
a base member that is fixed to the vehicle and that holds the intermediate guide member such that the intermediate guide member is able to reciprocate along a second axis, wherein
the first axis extends in a downward direction as the first axis extends toward the front side of the vehicle, and
the second axis extends in an upward direction relative to the first axis as the second axis extends toward the front side of the vehicle, and extends in an upward direction relative to horizontal as the second axis extends toward the front side of the vehicle.

2. The steering system according to claim 1, wherein
the intermediate guide member includes
a holding member that holds the first movable member such that the first movable member is able to reciprocate along the first axis, and
a second movable member that is held by the base member so as to be able to reciprocate along the second axis, and that holds the holding member such that the holding member is tiltable, and
the base member holds the second movable member such that the second movable member is able to reciprocate along the second axis.

3. (Cancelled)

4. The steering system according to claim 1 or 2, wherein
the base member includes a first base rail that is disposed on one side of the first movable member in a width direction of the vehicle and extends along the second axis, and a second base rail that is disposed on another side of the first movable member and extends along the second axis, and
the intermediate guide member includes a first movable rail that is disposed on the one side of the first movable member in the width direction of the vehicle and is guided by the first base rail, and a second movable rail that is disposed on the other side of the first movable member and is guided by the second base rail.
